# EUROPEAN PATENT APPLICATION

(11) **EP 4 318 754 A1**
(43) Date of publication of application: **07.02.2024**
(21) Application number: 22779049.0
(22) Date of filing: 30.03.2022
(51) Int. Cl.: H01M 50/204

(54) **BATTERY MODULE FOR VEHICLE, AND VEHICLE**

(30) Priority: 31.03.2021 CN 202120665766 U
(71) Applicant: SVOLT ENERGY TECHNOLOGY CO., LTD, Changzhou, Jiangsu 213200 (CN)
(72) Inventor: QU, Fanduo, hangzhou, Jiangsu 213200 (CN)
(74) Representative: dompatent von Kreisler Selting Werner - Partnerschaft von Patent- und Rechtsanwälten mbB
(86) International application number: PCT/CN2022/084220
(87) International publication number: WO 2022/206867

(57) **Abstract**

The present application discloses a battery module for a vehicle and a vehicle, said battery module (100), comprising: a plurality of battery cells (10), the plurality of battery cells (10) being sequentially arranged in a left-right direction in the battery module (100); an upper side plate (20), the upper side plate (20) covering the top of the battery cell (10), the upper side plate (20) having a first flange (21) extending downwards at the left and right ends, two said first flaps (21) being used to hold the plurality of the battery cells (10); a lower side plate (30), the lower side plate (30) covering the bottom of the battery cell (10), said lower side plate (30) having a second flange (31) extending upwards at the left and right ends, two said second flaps (31) being used to hold the plurality of the battery cells (10).

## Description

This disclosure claims the priority of the Chinese patent application with the application number 202120665766.7 and the application title "Battery Module for Vehicles and Vehicles" filed with the China National Intellectual Property Administrationon on March 31, 2021, the entire contents of which are incorporated herein by reference.

### Technical Field

The present disclosure relates to the technical field of vehicles, and in particular, to a battery module for a vehicle and a vehicle.

### Background technique

In the related art, the battery pack is assembled in the form of modules, that is, a battery pack has multiple battery modules, and the end plates, side plates and other structures of the battery modules can provide certain protection for the battery cells, and in the secondary protection through the box of the battery pack, there is structural redundancy, which reduces the space utilization rate of the battery pack, and reduces the energy density of the battery pack.

### Application content

The present disclosure aims to solve at least one of the technical problems existing in the prior art. To this end, an object of the present disclosure is to provide a battery module with higher energy density.

The present disclosure further proposes a vehicle employing the above battery module.

A battery module for a vehicle according to an embodiment of the first aspect of the present disclosure includes: a plurality of battery cells, and the plurality of battery cells are sequentially arranged in the left-right direction of the battery module; an upper side plate, the upper side plate covers the top of the battery cell, the left and right ends of the upper side plate have first flanges extending downward, and the two first flanges are used to clamp a plurality of the battery cell; a lower side plate, the lower side plate covers the lower part of the battery cell, the left and right ends of the lower side plate have second flanges extending upward, and the two second flanges are used for holding a plurality of the battery cells.

According to the battery module of the embodiment of the present disclosure, the cell is clamped and fixed above the cell by the first flanging of the upper side plate, and the cell is clamped under the cell by the second flanging of the lower side plate. Under the premise of ensuring the stability of the battery module, there is no need to set side plates on the left and right sides of the battery module, which can reduce the space occupation of the battery module by the structural parts, so that the energy density of the battery module can be higher. , effectively improving the space occupation of the battery module.

According to some embodiments of the present disclosure, the first flange and the second flange located at the same side end of the battery module extend toward each other.

In some embodiments, the height of the battery cell is L, and the extension length of the first flange and the second flange toward each other is 0.05L-0.5L.

In some embodiments, the upper side plate is provided with a first weight reduction hole, and the lower side plate is provided with a second weight reduction hole.

In some embodiments, the first weight reduction hole and the second weight reduction hole are configured as any one of an oblong hole, an elongated rectangular hole, and a round hole.

In some embodiments, the battery pack further includes: two protective plates, the two protective plates being disposed on the same side of one end of the upper side plate and the lower side plate, and on the same side of the other end of the upper side plate and the lower side plate, respectively. In some embodiments, the protective plate is fixed to the upper side plate and the lower side plate by an adhesive tape.

In some embodiments, the protective plate and the battery cells are both located between the two first flanges of the upper side plate, and the protective plate and the battery cells are both located on the lower side plate between the two said second flanges.

According to some embodiments of the present application, the upper side plate and the upper surface of the battery cell, and the lower side plate and the lower surface of the battery cell are glued together.

A vehicle according to an embodiment of the second aspect of the present application includes: the battery module for a vehicle described in the above embodiments.

Additional aspects and advantages of the present disclosure will be set forth, in part, from the following description, and in part will become apparent from the following description, or may be learned by practice of the present disclosure.

### Description of drawings

The above and/or additional aspects and advantages of the present disclosure will become apparent and readily understood from the following description of embodiments taken in conjunction with the accompanying drawings, wherein:
FIG. 1 is a schematic diagram of an angle of a battery module according to an embodiment of the present disclosure;
Fig. 2 is a schematic diagram of a battery module from another angle according to an embodiment of the present disclosure;
Fig. 3 is a schematic diagram of an upper side plate and a lower side plate of a battery module according to an embodiment of the present disclosure.

Reference number:
battery module 100,
battery cell 10,
The upper side plate 20, the first flange 21,
The lower side plate 30, the second flange 31,
protective plate 40.

### Detailed Description

Embodiments of the present disclosure are described in detail below, examples of which are illustrated in the accompanying drawings, wherein the same or similar reference numerals refer to the same or similar elements or elements having the same or similar functions throughout. The embodiments described below with reference to the accompanying drawings are exemplary and are only used to explain the present disclosure and should not be construed as a limitation of the present disclosure.

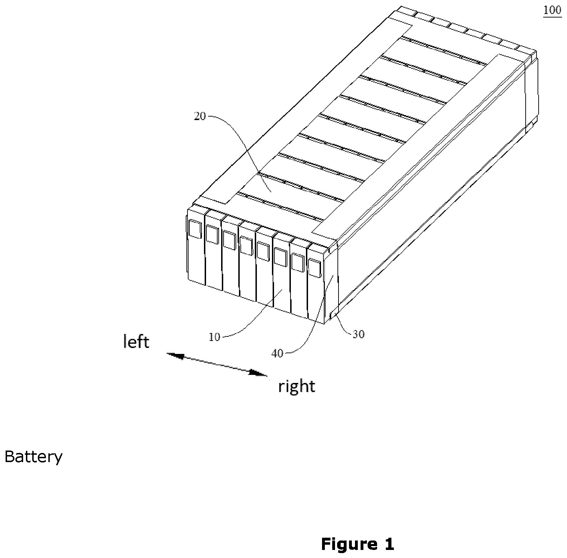

The battery module 100 and the vehicle according to the embodiments of the present disclosure are described below with reference to FIGS. 1-3.

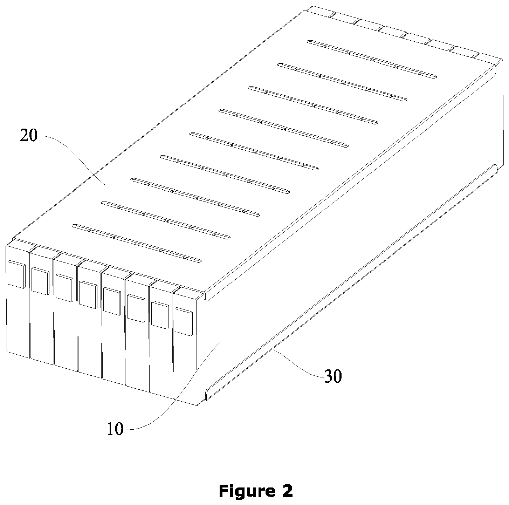

As shown in FIGS. 1 and 2 , a battery module 100 for a vehicle according to an embodiment of the first aspect of the present disclosure includes: a battery cell 10, an upper side plate 20 and a lower side plate 30.

Among them, there are a plurality of battery cells 10, and the plurality of battery cells 10 are arranged in sequence in the left and right direction of the battery module 100; the upper side plate 20 covers the top of the battery cell 10, and the left and right ends of the upper side plate 20 have downwardly-extending first flaps 21, the two first flanges 21 are used to clamp the plurality of battery cells 10; the lower side plate 30 covers the lower part of the battery cells 10, and the left and right ends of the lower side plate 30 have upwardly extending second flanges 31, the two second flanges 31 are used for clamping the plurality of battery cells 10.

A plurality of battery cells 10 are arranged in sequence, an upper side plate 20 is arranged above the battery cells 10, and the first flanges 21 of the upper side plate 20 extend downwardly at the left and right ends of the upper side plate 20 and is used to clamp and fix the plurality of battery cells 10 sequentially arranged in a width direction. A lower side plate 30 is arranged below the battery cells 10, the left and right ends of the lower side plate 30 have upwardly-extending second flaps 31, and the second flanges 31 are used to clamp the plurality of battery cells. The second flanges 31 for clamping and fixing the plurality of battery cells 10.

According to the battery module 100 of the embodiment of the present disclosure, the battery cell 10 is clamped and fixed by the first flange 21 of the upper side plate 20 from the above, and the battery cell 10 is clamped and fixed by the second flange 31 of the lower side plate 30 from below. On the premise of ensuring the stability of the battery module 100, there is no need to set side plates on the left and right sides of the battery module 100, which can reduce the space for the battery module 100 by the structural parts. Occupied, so that the energy density of the battery module 100 is higher, and the space occupation of the battery module 100 is effectively improved.

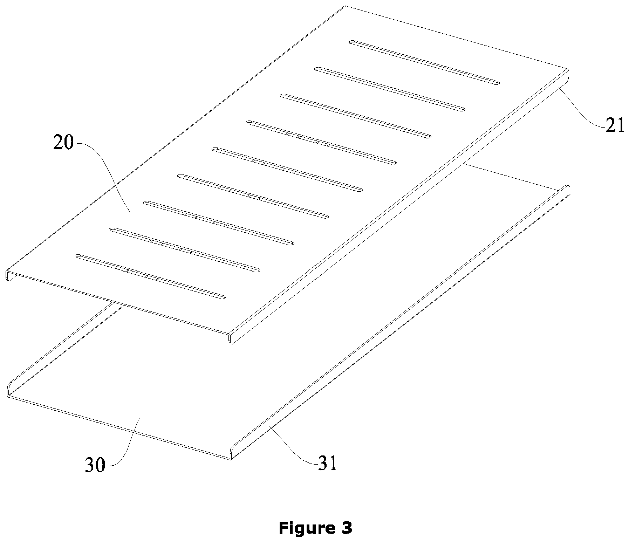

As shown in FIG. 3 , according to some embodiments of the present disclosure, the first flange 21 and the second flange 31 located on the same side of the battery module 100 extend toward each other, the height of the battery cell 10 is L, and the extension length of the first flange 21 and the second flange 31 toward each other is 0.05L-0.5L.

In this way, it ensured that the length of the first flange 21 extending toward the lower side plate 30 and the length of the second flange 31 extending toward the upper side plate 20 are more reasonable. , the fixing stability of the battery cells 10 in the battery module 100 can be effectively improved, so as to improve the working stability and use safety of the battery module 100 .

The upper side plate 20 and the lower side plate 30 can be steel plates, aluminum plates, limit reinforced composite material plates, etc. If metal plates such as steel plates and aluminum plates are used, the lower surface of the upper side plate 20 and the upper surface of the lower side plate 30 need to be insulated and perform insulation treatment, the thickness of the upper side plate 20 and the lower side plate 30 is 0.5mm-5mm, which can be selected according to the requirements of the battery pack.

As shown in FIGS. 1 and 2, in some embodiments, the upper side plate 20 is provided with a first weight reduction hole, and the lower side plate 30 is provided with a second weight reduction hole. Thus, by providing the weight reduction holes, on the premise of realizing weight reduction and effectively reducing the weight of the battery module 100 so that the battery module 100 meets the requirements for lightweighting, the weight reduction holes can also be used as exhaust holes, which are used for exhausting air during the gluing process to avoid warping phenomenon of the upper side plate 20 or the lower side plate 30 during the assembly process. According to some embodiments of the present disclosure, the upper side plate 20 and the upper surface of the battery cell 10 and the lower side plate 30 and the lower surface of the battery cell 10 are glued together, and further, the first weight reduction hole and the second weight reduction hole are both configured as any one of the oblong hole, the long rectangular hole and the round hole, the first weight reduction hole and the second weight reduction hole are all constructed as oblong holes or long rectangular holes (i.e. long holes), under the premise of weight reduction and exhaust, which can reduce the influence of the uneven surface of the upper side board 20 or the lower side board 30 on the adhesive effect.

In some embodiments, the battery pack further includes: two protective plates 40 , and the two protective plates 40 are respectively disposed on one side end of the upper side plate 20 and the lower side plate 30 , and on the other side end of the upper side plate 20 and the lower side plate 30 .

Therefore, by providing the protective plate 40 with a heat insulating effect, the working stability of the battery module 100 can be improved, and the battery module 100 can be effectively separated from the outside, so as to reduce the constraints of thermal runaway spreading between the battery modules 100 and improving the use safety of the battery module 100 .

In some embodiments, the protective plate 40 is fixed to the upper side plate 20 and the lower side plate 30 by adhesive tape; in other embodiments, the protective plate 40 and the side surface of the battery cell 10 are fixed by double-sided tape.

In some embodiments, the protective plate 40 and the battery cells 10 are located between the two first flanges 21 of the upper side plate 20 , and the protective plate 40 and the battery cells 10 are located between the two second flanges of the lower side plate 30 . between 31.

In some embodiments, the protective plate 40, the battery cell 10 are all located between the two first flanges 21 of the upper side plate 20, and the protective plate 40, the battery cell 10 are all located between the two second flanges 31 of the lower side plate 30.The protective plate 40 is configured as: any one of a metal plate, a mica plate, an epoxy plate, or an aerogel plate.

A vehicle according to an embodiment of the second aspect of the present disclosure includes: the battery module 100 for a vehicle in the above-mentioned embodiments.

The vehicle according to the embodiment of the present disclosure adopts the battery module 100 in the above-mentioned embodiment, and the technical effect is the same as that of the above-mentioned battery module 100 , which is not repeated here.

In the description of the present disclosure, it is to be understood that the terms "center", "longitudinal", "lateral", "length", "width", "thickness", "upper", "lower", "front", " Back, Left, Right, Vertical, Horizontal, Top, Bottom, Inner, Outer, Clockwise, Counterclockwise, Axial , "radial", "circumferential" and other indicated orientations or positional relationships are based on the orientations or positional relationships shown in the accompanying drawings, and are only for the convenience of describing the present disclosure and simplifying the description, rather than indicating or implying the indicated device or elements must have a particular orientation, be constructed, and operate in a particular orientation and are therefore not to be construed as limitations of the present disclosure.

In the description of the present disclosure, "first feature", "second feature" may include one or more of such features.

In the description of the present disclosure, "plurality" means two or more.

In the description of the present disclosure, a first feature being "above" or "beneath" a second feature may include the first and second features in direct contact, or may include the first and second features not in direct contact but through them Additional feature contacts between.

In the description of the present disclosure, a first feature "above", "over" and "above" a second feature includes that the first feature is directly above and obliquely above the second feature, or simply means that the first feature is level above Second feature.

In the description of this specification, reference to the terms "one embodiment," "some embodiments," "exemplary embodiment," "example," "specific example," or "some examples", etc., is meant to incorporate the embodiments a particular feature, structure, material, or characteristic described by an example or example is included in at least one embodiment or example of the present disclosure. In this specification, schematic representations of the above terms do not necessarily refer to the same embodiment or example. Furthermore, the particular features, structures, materials or characteristics described may be combined in any suitable manner in any one or more embodiments or examples.

Although embodiments of the present disclosure have been shown and described, it will be understood by those of ordinary skill in the art that various changes, modifications, substitutions, and alterations can be made in these embodiments without departing from the principles and spirit of the present disclosure, The scope of the present disclosure is defined by the claims and their equivalents.

## Claims

1. A battery module (100) for a vehicle, **characterized by** comprising:
a plurality of battery cells (10), the plurality of battery cells (10) are arranged in sequence in the left-right direction of the battery module (100);
an upper side plate (20), the upper side plate (20) covers the top of the battery cell (10), and the left and right ends of the upper side plate (20) are provided with downwardly extending first flanges ( 21), the two first flanges (21) are configured to clamp the plurality of the battery cells (10);
a lower side plate (30), the lower side plate (30) covers the lower part of the battery cell (10), and the left and right ends of the lower side plate (30) are provided with upwardly extending second flanges (31), and the two second flanges (31) are configured to clamp the plurality of the battery cells (10).

2. The battery module (100) for a vehicle according to claim 1, **characterized in that** the first flange (21) and the second flange(31) are located at one end on the same side of the battery module (100) extend towards each other.

3. The battery module (100) for a vehicle according to claim 2, wherein the height of the battery cell (10) is L, the extension length of the first flange (21) and the second flange (31) towards each other is 0.05L-0.5L.

4. The battery module (100) for a vehicle according to any one of claims 1-3, wherein the upper side plate (20) is provided with a first weight reduction hole, and the lower side plate (30) is provided with a second weight reduction hole.

5. The battery module (100) for a vehicle according to claim 4, **characterized in that**, the first weight reduction hole and the second weight reduction hole are both configured as any of oblong holes, long rectangular holes or circular holes.

6. The battery module (100) for a vehicle according to any one of claims 1-5, **characterized in that** further comprising: two protective plates (40), the two protective plates (40) being provided at one end of the upper side plate (20) and the lower side plate (30) on the same side, and at the other end of the upper side plate (20) and the lower side plate (30) on the same side respectively.

7. The battery module (100) for a vehicle according to claim 6, wherein the protective plate (40) is fixed to the upper side plate (20) and the lower side plate (30) by an adhesive tape .

8. The battery module (100) for a vehicle according to claim 6 or 7, wherein the protective plate (40) and the battery cells (10) are both located between the two first flanges (21) of the upper side plate (20), and the protective plate (40), the battery cell (10) are both located between the two second flanges (31) of said lower side plate (30).

9. The battery module (100) for a vehicle according to any one of claims 1-8, **characterized in that**, the upper side plate (20) is glued to the upper surface of the battery cell (10), the lower side plate (30) is glued to the lower surface of the battery cell (10).

10. A vehicle, **characterized by** comprising: the battery module (100) for a vehicle according to any one of claims 1-9.
